# EUROPÄISCHE PATENTSCHRIFT

(11) **EP 1 538 113 B1**
(45) Veröffentlichungstag und Bekanntmachung des Hinweises auf die Patenterteilung: **23.08.2006**
(21) Anmeldenummer: 04027891.3
(22) Anmeldetag: 27.06.2003
(51) Int. Cl.: B65G 19/02

(54) **Fördereinrichtung**
Conveying device
Dispositif de transport

(30) Priorität: 01.07.2002 DE 10229440
(43) Veröffentlichungstag der Anmeldung: 08.06.2005
(62) Teilanmeldung aus: 03014737.5
(73) Patentinhaber: Bosch Rexroth Aktiengesellschaft, 70173 Stuttgart (DE)
(72) Erfinder: Ludwig, Peter, 72075 Tübingen (DE); Lindemann, Uwe, 71088 Holzgerlingen (DE)
(74) Vertreter: Herzog, Markus

(56) Entgegenhaltungen:
- EP-A- 0 623 518
- DE-A1- 3 212 224
- DE-A1- 19 517 276
- DE-A1- 19 825 955
- GB-A- 601 719
- US-A- 5 735 384

## Beschreibung

Die Erfindung betrifft eine Fördereinrichtung zum Transport von Fördergut mit wenigstens einer Profilschiene, mit wenigstens einem von der wenigstens einen Profilschiene getragenen und längs dieser bewegbaren Fördergutträger, und mit einem sich längs wenigstens einer Profilschiene erstreckenden, antreibbaren Fördermittel, wobei der wenigstens eine Fördergutträger wenigstens eine Eingriffseinheit aufweist, welche mit dem Fördermittel in Mitnahmeeingriff steht oder bringbar ist.

Derartige Transfersysteme dienen beispielsweise in einer Produktionslinie zum Transport von Werkstücken zwischen einzelnen Stationen, an welchen Bearbeitungs- oder Montagevorgänge erfolgen. Beispielhaft sei auf den Katalog "Transfersystem TS2" der Robert Bosch GmbH verwiesen. Neben der Verbindung manueller Arbeitsplätze eignet sich dieses Transfersystem auf Grund seiner hohen Positioniergenauigkeit aber auch zum Einsatz bei der automatisierten Montage.

Bei diesem bekannten System liegen auf zwei stetig umlaufenden Fördermitteln, beispielsweise Gurten oder Ketten, Fördergutträger lose auf, welche Werkstücke aufnehmen (s. Katalog S. 1-1). Die Werkstücke werden auf den Fördergutträgern bearbeitet. An den Bearbeitungs- und Montagestationen wird der Fördergutträger durch Vereinzeler angehalten bzw. verlangsamt, während das Fördermittel mit unveränderter Geschwindigkeit weiterläuft. Dies hat zur Folge, dass zwischen Fördergutträger und Fördermittel eine Relativbewegung stattfindet. Je nachdem, welches Fördermittel verwendet wird und wie schwer Fördergutträger und Werkstück sind, kommt es auf Grund der mit der Relativbewegung zwischen Fördergutträger und Fördermittel einhergehenden Reibung zu einem mehr oder weniger starken Verschleiß an Fördergutträger und Fördermittel. Zudem erfordert das bekannte System einen leistungsstarken Antrieb, da dieser nicht nur für den Vortrieb der Fördergutträger im Bereich der Förderabschnitte der Produktionslinie, sondern auch für die Überwindung der vom Gewicht der Werkstücke und Fördergutträger herrührenden Haftreibung zwischen dem Fördermittel und dem Fördergutträger im Bereich von Bearbeitungs- und Montagestationen sorgen muss.

Das letztgenannte Problem der Koppelung von Gewichts- und Vortriebskraft ist bei der aus der gattungsbildenden DE 198 25 955 A1 bekannten Fördereinrichtung gelöst. Bei dieser Fördereinrichtung sind die Fördergutträger über Laufrollen auf einer Laufschiene längsbeweglich abgestützt. Bei einer ersten Ausführungsform weist dabei die Laufschiene eine Antriebsbandführung auf, in welcher ein Reibband geführt ist. Mit diesem Reibband steht eine Reibfläche des Fördergutträgers in kraftschlüssigem Mitnahmeeingriff. Bei einem Stau der Fördergutträger wird der reibschlüssige Eingriff des Fördergutträgers mit dem Reibband unterbrochen. Gleichwohl kommt es auf Grund der Relativbewegung zwischen Reibband und Fördergutträger zu einem Verschleiß der sich berührenden Flächen.

Bei einer zweiten Ausführungsform der DE 198 25 955 A1 kommt eine Antriebskette mit fingerartigen Mitnehmern zum Einsatz, welche die Fördergutträger formschlüssig mitnehmen. Die Mitnahmefinger sind umklappbar ausgeführt, um ein Anhalten der Fördergutträger ermöglichen zu können. Neben der aufwendigen Ausführung der Antriebskette mit den umklappbaren Mitnehmern kommt es auch bei dieser Ausführungsform bei einem Stau der Fördergutträger auf Grund des Anschlagens der Mitnahmefinger gegen die Fördergutträger zu einem Verschleiß der Antriebsvorrichtung.

Schließlich offenbart die DE 198 25 955 A1 noch eine dritte Ausführungsform, die eine Kombination der beiden ersten Ausführungsbeispiele darstellt und somit ebenfalls deren Nachteile aufweist, insbesondere den Nachteil eines nicht zu vernachlässigenden Verschleißes der Antriebsvorrichtung.

Zum Stand der Technik sei der Vollständigkeit halber ferner auf die DE 195 17 276 A1, die DE 32 12 224 A1 und die DE-PS 1 192 103 verwiesen.

Zusammenfassend besteht der Hauptnachteil des Standes der Technik darin, dass es bei einem Verlangsamen bzw. Anhalten der Fördergutträger zur Ermöglichung einer Bearbeitung der darauf angeordneten Werkstücke zu einem Verschleiß des für eine ordnungsgemäße Funktion der Antriebsvorrichtung besonders wichtigen Antriebsmittels, beispielsweise Antriebsbandes, kommt.

Demgegenüber ist es Aufgabe der Erfindung, eine Fördereinrichtung der eingangs genannten Art bereitzustellen, welche sich durch einen geringeren, wenn nicht gar vernachlässigbaren Verschleiß des Fördermittels auszeichnet.

Erfindungsgemäß wird diese Aufgabe durch eine gattungsgemäße Fördereinrichtung gelöst, bei welcher die Eingriffseinheit ein um eine Lagereinheit umlaufendes Eingriffselement aufweist und bei welcher ferner eine die Umlaufbewegung des Eingriffselements beeinflussende, insbesondere hemmende, Kupplungsanordnung vorgesehen ist. Auf diese Weise kann Verschleiß beim Anhalten bzw. Verlangsamen des Fördergutträgers nicht an den für den Mitnahmeeingriff verantwortlichen Funktionsflächen von Fördergutträger und Fördermittel auftreten, sondern allenfalls an der hierfür speziell vorgesehenen Kupplungsanordnung, und zwar beispielsweise dann, wenn diese eine Reibanordnung umfasst. Diese Reibanordnung kann, insbesondere was ihre Konstruktion und die Auswahl der verwendeten Werkstoffe anbelangt, auf ihre Funktion als Rutschkupplung und Verschleißteil hin optimiert werden. Wenn die Kupplungsanordnung hingegen eine Magnetkupplung aufweist, so kann die Umlaufbewegung des Eingriffselements auch annähernd verschleißfrei beeinflusst werden.

In beiden Ausführungsvarianten, Reibkupplung bzw. Magnetkupplung, kann eine Stellanordnung vorgesehen sein, mittels derer der Betrag der Beeinflussung der Umlaufbewegung des Eingriffselements veränderbar ist. Im Falle der Reibkupplung etwa kann die Stellanordnung die Andrückkraft der Reibanordnung gegen das umlaufende Eingriffselement beeinflussen. Hingegen kann die Stellanordnung im Falle der Magnetkupplung die Weite eines Luftspaltes verändern, der die beiden miteinander magnetisch wechselwirkenden Magnetkupplungsteile voneinander trennt. Darüber hinaus kann die Stellanordnung für eine integrierte Verschleißnachstellung sorgen. In beiden Ausführungsvarianten kann die Stellanordnung zur effektiven Ausnutzung des zur Verfügung stehenden Bauraums in einer zur Umlaufebene des Eingriffselements im Wesentlichen orthogonal verlaufenden Wirkrichtung auf die Kupplungsanordnung einwirken.

Zwar ist es grundsätzlich auch denkbar, dass das umlaufende Eingriffselement als umlaufendes Band oder Kette ausgebildet ist. Bevorzugt wird man jedoch ein Rad als umlaufendes Eingriffselement verwenden, da dessen Lagerung konstruktiv einfacher und dessen Eingriff mit dem Fördermittel auf Grund seiner im Wesentlichen starren bzw. im Vergleich mit einem Band bzw. Kette starreren Ausbildung effektiver ist. Vorteilhaft ist ferner, wenn das Eingriffselement und das Fördermittel in formschlüssigem Mitnahmeeingriff stehen. Grundsätzlich ist zwar auch ein reibschlüssiger Eingriff zwischen Eingriffsmittel und Fördermittel denkbar. Dieser erfordert dann aber eine präzise Abstimmung der Reibungskräfte zwischen Eingriffselement und Fördermittel einerseits sowie Eingnffsetement und Kupplungsanordnung andererseits, um sicherzustellen, dass beim Anhalten bzw. Verlangsamen des Fördergutträgers die hierzu erforderliche Relativbewegung auch tatsächlich zwischen Eingriffselement und Kupplungsanordnung stattfindet. Besonders bevorzugt ist es daher, das Fördermittel als Zahnriemen und das Eingriffselement entsprechend als Zahnrad auszubilden.

Um einen ordnungsgemäßen Eingriff von Eingriffselement und Fördermittel sicherstellen zu können, wird vorgeschlagen, dass wenigstens eine Profilschiene einen Führungsabschnitt aufweist, der mit dem Lagerelement in Führungseingriff steht. Wirkt der Führungsabschnitt überdies federnd auf das Lagerelement ein, um dieses in Eingriff mit dem Fördermittel zu halten, so können die beim Anhalten bzw. Verlangsamen des Fördergutträgers zwischen Fördermittel und Eingriffselement auftretenden Kräfte zumindest teilweise von dieser Federung gemindert werden. Dies wirkt sich auf den Verschleiß von Eingriffselement und Fördermittel günstig aus.

Für einen ordnungsgemäßen Eingriff von Eingriffselement und Fördermittel ist es ferner vorteilhaft, wenn wenigstens eine Profilschiene wenigstens eine Führungsausnehmung zum Führen des Fördermittels aufweist.

In Weiterbildung der Erfindung ist vorgesehen, dass wenigstens eine Profilschiene einen Gleitabschnitt aufweist, auf dem der wenigstens eine Fördergutträger aufliegt. Dieser Gleitabschnitt kann dabei eine gesondert ausgebildete Gleitleiste umfassen, die beispielsweise in einer Nut, vorzugsweise formschlüssig, gehalten ist. Alternativ ist es jedoch ebenso möglich, dass der Gleitabschnitt ein an der Profilschiene einstückig angeformter Gleitansatz ist. In jedem Fall kann die Gleitleiste bzw. der Gleitabschnitt aus einem reibungsarmen Material gefertigt sein, so dass die beim Fördern der Fördergutträger längs der Profilschiene von der Gewichtskraft herrührende und von der Antriebsvorrichtung zu überwindende Reibkraft zwischen Fördergutträger und Gleitabschnitt nur einen geringen Wert aufweist.
Der gleiche Vorteil kann auch dadurch erzielt werden, dass wenigstens eine Profilschiene eine Führungsbahn für wenigstens einen dem Fördergutträger zugeordneten Linearschlitten aufweist, wobei beispielsweise eine Laufrollenführung oder eine Kugelumlaufführung oder eine Kugelrollenanordnung zum Einsatz kommen kann.

Zur Minderung der Störanfälligkeit der Antriebsvorrichtung wird in Weiterbildung der Erfindung vorgeschlagen, dass wenigstens eine Profilschiene einen Rückführkanal für das Fördermittel aufweist. Auf einen Rückführkanal kann beispielsweise dann verzichtet werden, wenn auch der rücklaufende Abschnitt des Fördermittels an Arbeitsstationen vorbeiläuft und zum Antrieb von Fördergutträgern benutzt wird.

Nicht nur zur einfachen Ausbildung dieses Rückführkanals kann es ferner vorteilhaft sein, wenn wenigstens eine Profilschiene mehrstückig ausgebildet ist mit wenistens einem Tragprofil und wenigstens einem Führungsprofil. Dabei kann das Tragprofil als Leichtmetallprofil, vorzugsweise AluminiumProfil, und das Führungsprofil als Kunststoffprofil ausgebildet sein. Die beiden Profile können beispielsweise durch Aufrasten des Kunststoffprofils auf das Leichtmetallprofil miteinander verbunden werden. Das aus Kunststoff gebildete Führungsprofil kann dabei die vorstehend angesprochenen Führungsausnehmungen für das Fördermittel und den Führungsabschnitt für das Lagerelement aufweisen. Das federnde Andrücken des Lagerelements gegen das Fördermittel durch den Führungsabschnitt kann beispielsweise durch eine dem Kunststoffmaterial des Führungsabschnitts inhärente Elastizität bereitgestellt werden. Grundsätzlich ist aber auch der Einsatz einstückiger Profilschienen denkbar.

Um die Bewegung des Fördergutträgers verlangsamen oder/und beschleunigen zu können, wird vorgeschlagen, dass das Eingriffselement zumindest längs eines Teils der Förderstrecke neben dem Fördermittel ferner mit einer zusätzlichen Eingriffsanordnung in Eingriff bringbar ist. Dabei kann die zusätzliche Eingriffsanordnung in der einfachsten Ausführung feststehend ausgebildet sein, beispielsweise als Zahnstange. Eine derartige feststehende zusätzliche Eingriffsanordnung führt für eine durch ihre Erstreckung in Bewegungsrichtung des Fördergutträgers vorgegebene Zeitdauer zu einer konstanten Änderung der Geschwindigkeit des Fördergutträgers. Alternativ kann die zusätzliche Eingriffsanordnung aber auch als umlaufende Eingriffsanordnung ausgebildet sein, beispielsweise als ein mit einem separaten Antrieb versehener Zahnriemen. Mit einer umlaufenden zusätzlichen Eingriffsanordnung kann die Bewegung des Fördergutträgers in beliebiger gewünschter Weise beschleunigt oder/und verzögert werden. Ja, es ist sogar eine Umkehr der Bewegungsrichtung des Fördergutträgers denkbar.

Die erfindungsgemäße Fördereinrichtung kann auch dann, wenn tischartig ausgebildete Fördergutträger zum Einsatz kommen, die auf wengistens zwei Profilschienen aufliegen, mittels einer Antriebsvorrichtung angetrieben werden, deren Fördermittel lediglich an einer dieser Profilschienen vorgesehen ist. Dies ist insbesondere deshalb von Vorteil, weil hierdurch eine Änderung des Breitenmaßes des Fördergutträgers nicht notwendigerweise auch eine Breitenänderung der Antriebsvorrichtung nach sich ziehen muss. Darüber hinaus können Kurvenabschnitte und Abzweigungen von der bzw. Einmündungen in die Hauptstrecke ohne aufwendige Zusatzeinheiten, wie Rollenkurven, Hub-Quereinheiten und dergleichen realisiert werden.

Wenn jeder Fördergutträger wenigstens zwei Eingriffselemente aufweist, so kann das Ausschleusen und Einschleusen eines Fördergutträgers aus der bzw. in die Hauptstrecke in einfacher Weise, insbesondere ohne den Einsatz von Zusatzantrieben, realisiert werden, da die Antriebsvorrichtungen von Haupt- und Nebenstrecke ohne weiteres so angeordnet werden können, dass zu jedem Zeitpunkt immer wenigstens eines der Eingriffselemente mit dem Fördermittel der Hauptstrecke oder der Nebenstrecke in Eingriff steht.

Die Erfindung wird im Folgenden an Hand der beigefügten Zeichnung an Ausführungsbeispielen näher erläutert werden. Es stellt dar:
- Fig. 1: eine orthogonal zur Bewegungsrichtung der Fördergutträger genommene Schnittansicht einer ersten Ausführungsform einer erfindungsgemäßen Fördereinrichtung;
- Fig. 2 und 3: Ansichten ähnlich Fig. 1 weiterer erfindungsgemäßer Fördereinrichtungen;
- Fig. 4 bis 6: schematische Draufsichten auf erfindungsgemäße Fördereinrichtungen zur Erläuterung von Ausführungsvarianten; und
- Fig. 7: eine Ansicht ähnlich Fig. 1 einer weiteren Ausführungsform einer erfindungsgemäßen Fördereinrichtung.

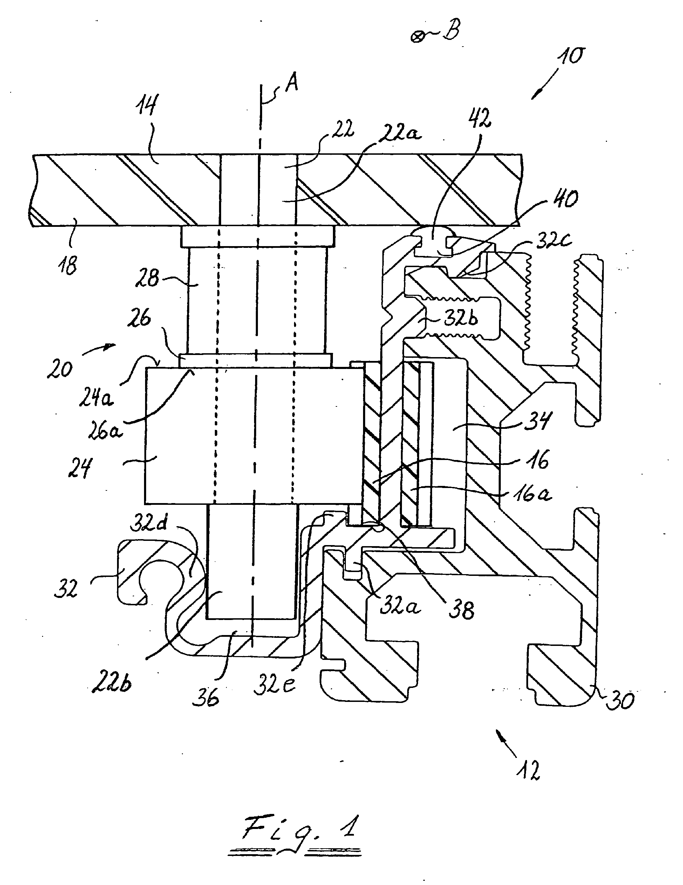

In Fig. 1 ist eine erfindungsgemäße Fördereinrichtung allgemein mit 10 bezeichnet. Sie umfasst eine Profilschiene 12, die sowohl zum Abstützen als auch zum Führen eines Fördergutträgers 14 dient. Ferner ist an der Profilschiene 12 als Fördermittel einer nicht im einzelnen dargestellten Antriebsvorrichtung ein Zahnriemen 16 geführt, der zum Antreiben des Fördergutträgers 14 in Bewegungsrichtung B bestimmt ist.

Der Fördergutträger 14 ist im vorliegenden Ausführungsbeispiel tischartig ausgebildet und umfasst eine Tischplatte 18, auf der das Fördergut, beispielsweise zu bearbeitende Werkstücke, befestigt oder lose angeordnet werden können. Ferner umfasst der Fördergutträger 14 eine Eingriffseinheit 20, die zum Eingriff mit dem Zahnriemen 16 ausgebildet ist. Auf einer Achse 22 (Achsrichtung A), deren oberes Ende 22a an der Platte 18 befestigt ist, ist ein Zahnrad 24 drehbar gelagert, dessen Außenverzahnung mit der Verzahnung des Zahnriemens 16 kämmt. Ein Reibelement 26 ist mittels einer in Achrichtung A wirkenden Federanordnung 28 gegen eine obere Stirnfläche 24a des Zahnrads 24 vorgespannt und steht mit dieser in Reibeingriff.

Die Vorspannkraft der Federanordnung 28 ist dabei derart gewählt, dass die Reibkräfte zwischen dem Reibelement 26 und dem Zahnrad 24 so groß sind, dass der Fördergutträger 14 auf Grund des Verzahnungseingriffs des Zahnrads 24 mit dem Zahnriemen 16 normalerweise von dem Zahnriemen 16 mitgenommen wird, ohne dass sich dabei das Zahnrad 24 um die Achse A dreht. Wird die Bewegung des Fördergutträgers 14 jedoch unterbrochen bzw. verglichen mit der Bewegung des Zahnriemens 16 beschleunigt oder verzögert, so beginnt das Zahnrad 24 am Zahnriemen 16 abzurollen und dreht sich entgegen der Reibungskraft zwischen Reibungselement 26 und Zahnrad 24 um die Achse A. Das Zahnrad 24 und das unter der Vorspannung durch die Federanordnung 28 stehende Reibelement 26 wirken zusammen also als Rutschkupplung, die eine Entkoppelung der Bewegung des Zahnriemens 16 und des Fördergutträgers 14 ermöglicht. Das Zahnrad 24 rollt dabei mit seiner Außenverzahnung im Wesentlichen verschleißfrei auf der Verzahnung des Zahnriemens 16 ab. Verschleiß findet in praktisch erheblichem Umfang nahezu ausschließlich zwischen dem Zahnrad 24 und dem Reibelement 26 statt.

Es versteht sich von selbst, dass die mit dem Reibelement 26 in Reibeingriff stehende Stirnfläche 24a des Zahnrads 24 entweder selbst verschleißfest ausgebildet oder mit einem verschleißfesten Reibbelag versehen sein kann. Der Verschleiß findet bei der erfindungsgemäßen Fördereinrichtung 10 also an hierfür speziell vorgesehenen und ausgebildeten Elementen statt.

Nachzutragen ist noch, dass die Reibfläche 26a des Reibelements 26 und die Stirnfläche 24a des Zahnrads 24 bzw. dessen Reibbelags bezüglich der Achse A konisch ausgebildet sein können. Dabei sorgt bereits eine leichte Konizität für eine Selbstzentrierung der miteinander in Eingriff stehenden Reibflächen bezüglich der Achse A. Bei starker Konizität kann darüber hinaus die zum Reibeingriff zu Verfügung stehende Fläche vergrößert werden.

In dem in Fig. 1 dargestellten Ausführungsbeispiel ist die Profilschiene 12 von zwei Profilen gebildet, nämlich einem Tragprofil 30 und einem Führungsprofil 32. Das Tragprofil 30 ist vorzugsweise als Leichtmetallprofil, beispielsweise als Aluminium-Strangpressprofil, ausgebildet und sorgt für die erforderliche Formstabilität der Profilschiene 12. Das Führungsprofil 32 hingegen kann beispielsweise aus Kunststoff gefertigt sein. Das Führungsprofil 32 weist Ansätze 32a, 32b und 32c auf, mittels derer es formschlüssig auf das Tragprofil 30 aufgesteckt und mit diesem verrastet ist. Die beiden Profile 30 und 32 bilden zusammen einen Rückführkanal 34, in welchem das sich nicht mit den Zahnrädern 24 von Fördergutträgem 14 in Eingriff befindende, passive Trum 16a des Zahnriemens 16 zurückgeführt wird.

Darüber hinaus ist das Führungsprofil 32 mit einer Führungsrinne 36 mit im Wesentlichen U-förmiger Gestalt ausgebildet. In dieser Führungsrinne 36 ist das untere Ende 22b der Lagerachse 22 für das Zahnrad 24 geführt. Somit repräsentiert die Führungsrinne 36 die Bewegungsbahn des Fördergutträgers 14. Der freie Schenkel 32d des Führungsprofils 32 ist dabei derart ausgebildet, dass er federnd gegen die Lagerachse 22 andrückt, wodurch das Zahnrad 24 in Verzahnungseingriff mit dem Zahnriemen 16 gehalten wird.

Nachzutragen ist noch, dass ein weiterer Ansatz 32e des Führungsprofils 32 eine Führungsausnehmung 38 für den Zahnriemen 16 bildet.

An seinem in Fig. 1 oberen Ende weist das Führungsprofil 32 eine hinterschnittene Nut 40 auf, in die eine Gleitleiste 42 eingesetzt ist. Auf der vorzugsweise aus einem reibungsarmen und abriebsbeständigen Material gefertigten Gleitleiste 42 liegt die Platte 18 des Fördergutträgers 14 auf und gleitet auf dieser entlang.

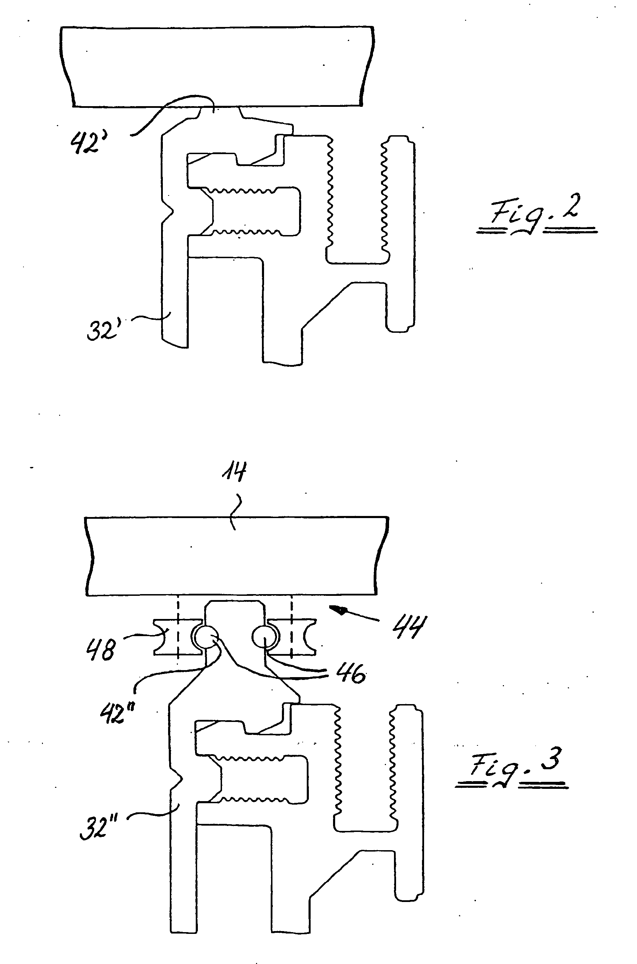

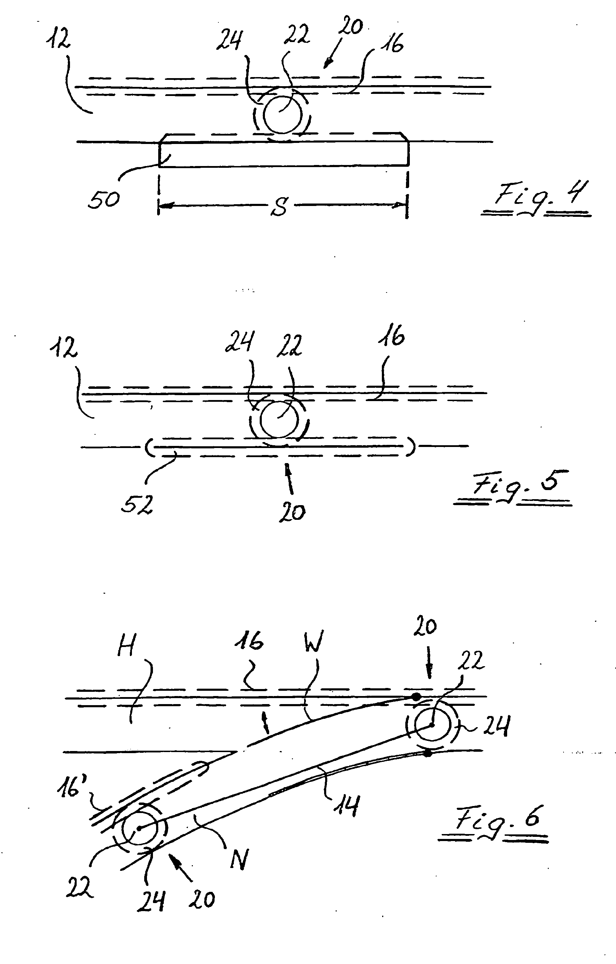

Anstelle des Vorsehens einer separaten Gleitleiste 42 auch das Führungsprofil 32' mit einem Gleitansatz 42' ausgebildet sein, wie dies in Fig. 2 dargestellt ist. Ferner können an dem Führungsprofil 32" auch Führungsbahnen für am Fördergutträger angeordnete Laufwagen 44 ausgebildet oder angeordnet sein. In dem in Fig. 3 dargestellten Ausführungsbeispiel sind diese Führungsbahnen 42' von Laufdrähten 46 gebildet, die in das Führungsprofil 32" eingebettet sind. Ferner umfasst der Laufwagen 44 in dem dargestellten Ausführungsbeispiel Laufrollen 48.

Ein wesentlicher Vorteil der erfindungsgemäßen Fördereinrichtung 10 ist darin zu sehen, dass im Betrieb dieser Fördereinrichtung 10 dann, wenn sich die Fördergutträger längs der Profilschiene 12 bewegen, nur die Reibungskraft zwischen den Gleitleisten 42 und der Tischplatte 18 der Fördergutträger überwunden werden muss, während bei einer Unterbrechung der Bewegung des Fördergutträgers 14 nur die Reibungskraft zwischen dem Reibelement 26 und dem Zahnrad 24 überwunden zu werden braucht. Die (nicht dargestellte) Antriebsvorrichtung für den Zahnriemen 16 kann daher entsprechend leistungsschwach ausgebildet sein.

Um den Fördergutträger 14 vollständig anhalten zu können, können an sich bekannte und daher hier nicht dargestellte und näher erläuterte Vereinzeler verwendet werden, die vorzugsweise unmittelbar auf die Tischplatte 18 der Fördergutträger 14 einwirken. Mit Bezug auf Fig. 4 und 5 soll hier aber auf zwei Vorrichtungen eingegangen werden, mit deren Hilfe die Geschwindigkeit der Bewegung der Fördergutträger 14 gezielt beeinflusst werden kann.

Bei der in Fig. 4 dargestellten Ausführungsvariante steht das Zahnrad 24 längs eines Streckenabschnitts S nicht nur mit der Verzahnung des Zahnriemens 16 in Eingriff, sondern auch mit der Verzahnung einer Zahnstange 50. Durch diesen zusätzlichen Verzahnungseingriff wird das Zahnrad 24 zwangsweise in-eine Drehbewegung um die Achse A versetzt, so dass es an dem Zahnriemen 16 entgegen dessen Bewegungsrichtung abrollt. Folglich wird der Fördergutträger 14 verglichen mit der Geschwindigkeit des Zahnriemens 16 verlangsamt.

Um den Fördergutträger 14 gezielt verzögern oder beschleunigen zu können, kann anstelle der Zahnstange 50 aber auch ein umlaufender Zahnriemen 52 verwendet werden, dessen Bewegungsrichtung und Bewegungsgeschwindigkeit gezielt vorgegeben werden können. Durch Einsatz einer geeigneten Positions- oder/und Geschwindigkeits-Sensorik für den Fördergutträger 14 kann eine (nicht dargestellte) Steuereinheit den Antrieb des zusätzlichen Zahnriemens 52 derart ansteuern, dass sich die gewünschte Bewegungsrichtung und Bewegungsgeschwindigkeit des Fördergutträgers 14 ergibt. Eine derartig gezielte Beeinflussung der Bewegung der Fördergutträger 14 ist von Vorteil, wenn es beispielsweise darum geht, den Abstand aufeinanderfolgender Fördergutträger auf ein vorbestimmtes Maß einzustellen oder einen Fördergutträger zu einem vorbestimmten Zeitpunkt an einer Bearbeitungsstation eintreffen zu lassen.

Nachzutragen ist noch, dass die Tischplatte 18 der Fördergutträger 14 auf wenigstens einer weiteren Profilschiene aufliegen kann. Diese weitere Profilschiene braucht aber nicht notwendigerweise ebenfalls mit einem Zahnriemenantrieb ausgerüstet zu sein und kann daher eine von der Profilschiene 12 verschiedene Gestalt aufweisen.

Ein großer Vorteil der Tatsache, dass lediglich eine dieser Profilschienen mit einem Riemenantrieb 16 ausgestattet zu sein braucht, liegt darin, dass die Breite der Fördereinrichtung 10 dem jeweiligen Anwendungsfall in einfacher Weise angepasst werden kann, ohne dass dies auch eine Änderung der Antriebsvorrichtung erfordern würde. Zudem ermöglicht das "einseitige" Antriebskonzept in einfacher Weise die Einbindung von Weichen W zum Einschleusen von Fördergutträgem 14 in eine Hauptförderstrecke H bzw. zum Ausschleusen von Fördergutträgem 14 von einer Hauptförderstrecke H in eine Nebenförderstrecke N.

Wenn ein und demselben Fördergutträger 14 zwei Eingriffseinheiten 20 zugeordnet sind, so kann hierdurch in einfacher Weise sichergestellt werden, dass beim Übergang von der Hauptförderstrecke H auf die Nebenförderstrecke N (oder umgekehrt) unter dem Einfluss einer Weiche W stets das Zahnrad 24 wenigstens einer der Eingriffseinheiten 20 mit dem Zahnriemen 16 der Hauptförderstrecke H oder dem Zahnriemen 16' der Nebenförderstrecke N in Verzahnungseingriff steht. Eine Geschwindigkeitsanpassung zwischen Hauptförderstrecke H und Nebenförderstrecke N findet dabei in einfacher Weise unter Einsatz der Rutschkupplungen zwischen den Reibelementen 26 und den Zahnrädern 24 statt. Somit kann auf den aufwendigen Einsatz von Zwischenförderstrecken zum Ausschleusen bzw. Einschleusen und zur Geschwindigkeitsanpassung verzichtet werden.

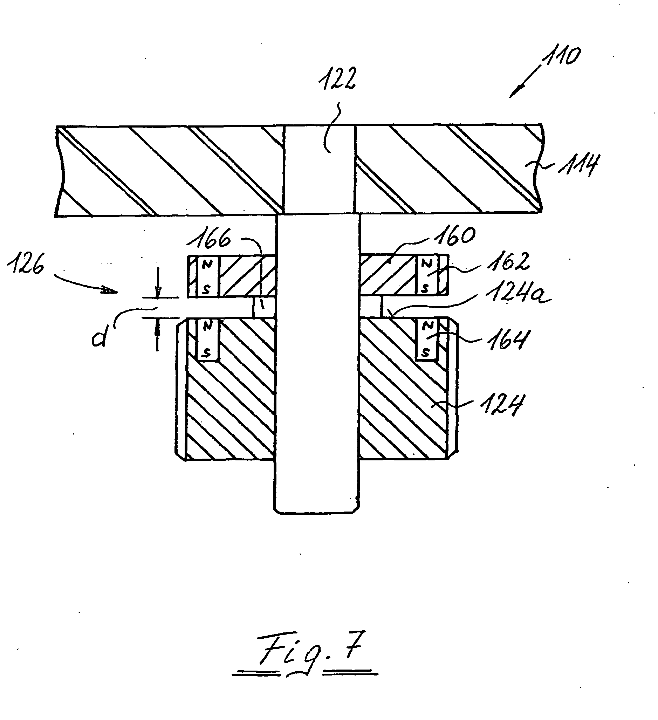

In Fig. 7 ist eine weitere Ausführungsform einer erfindungsgemäßen Fördereinrichtung dargestellt, welche im Wesentlichen der Ausführungsform gemäß Fig. 1 entspricht. Analoge Teile sind in Fig. 7 daher mit den gleichen Bezugszeichen versehen wie in Fig. 1, jedoch vermehrt um die Zahl 100. Darüber hinaus wird die Ausführungsform gemäß Fig. 7 im Folgenden nur insoweit beschrieben werden, als sie sich von der Ausführungsform der Fig. 1 unterscheidet, auf deren Beschreibung hiermit ansonsten ausdrücklich verwiesen sei.

Die Fördereinrichtung 110 verfügt an Stelle einer als Reibanordnung ausgebildeten Kupplungseinrichtung über eine magnetische Kupplungseinrichtung 126.

An der am Fördergutträger 114 fixierten Lagereinheit 122 ist eine feststehende Scheibe 160 angeordnet, die Permanentmagneten 162 hält. Die Permanentmagneten 162 sind vorzugsweise alle in der gleichen Magnetrichtung orientiert, d.h. beispielsweise weisen die Südpole aller Magneten 162 in der Darstellung gemäß Fig. 7 nach unten. Auch in der oberen Fläche 124a des drehbar auf der Lagereinheit 122 gelagerten Eingriffselements 124 sind Permanentmagnete 164 vorgesehen, die in Zahl, Anordnung und magnetischer Orientierung den Permanentmagneten 162 entsprechen. D.h. in einer Kupplungsstellung der Kupplungseinrichtung 126 steht jedem Permanentmagnet 162 ein zugehöriger Permanentmagnet 164 gegenüber, wobei zwei einander zugeordnete Magnete einander ungleichnamige Pole zukehren, so dass sie sich gegenseitig anziehen. Diese Anziehungskraft verhindert in gewissen Grenzen ein Durchdrehen des Eingriffselements 124.

Die Anziehungskraft kann bei vorgegebener Bestückung der Scheibe 160 und des Eingriffselements 124 mit Magneten 162 und 164 durch den Abstand d zwischen der Scheibe 160 und dem Eingriffselement 124 verändert bzw. eingestellt werden. Dieser Abstand kann entweder durch eine hierzu vorgesehene Stellvorrichtung beeinflusst werden. Alternativ ist es jedoch, wie in Fig. 7 dargestellt, auch möglich, ein Distanzstück 166 vorbestimmter Dicke d zwischen der Scheibe 160 und dem Eingriffselement 124 vorzusehen.

Eine Fördereinrichtung (10) zum Transport von Fördergut umfasst wenigstens eine Profilschiene (12), wenigstens einen von der wenigstens einen Profilschiene (12) getragenen und längs dieser bewegbaren Fördergutträger (14), und ein sich längs wenigstens einer Profilschiene (12) erstreckendes, antreibbares Fördermittel (16), wobei der wenigstens eine Fördergutträger (14) wenigstens eine Eingriffseinheit (20) aufweist, welche mit dem Fördermittel (16) in Mitnahmeeingriff steht oder bringbar ist. Erfindungsgemäß weist die Eingriffseinheit (20) ein um eine Lagereinheit (22) umlaufendes Eingriffselement (24) auf, und ferner ist eine die Umlaufbewegung des Eingriffselements (24) beeinflussende Kupplungsanordnung (26) vorgesehen.

## Patentansprüche

1. Fördereinrichtung (10) zum Transport von Fördergut, umfassend
- wenigstens eine Profilschiene (12),
- wenigstens einen von der wenigstens einen Profilschiene (12) getragenen und längs dieser bewegbaren Fördergutträger (14),
- ein sich längs wenigstens einer Profilschiene (12) erstreckendes, antreibbares Fördermittel (16),
wobei der wenigstens eine Fördergutträger (14) wenigstens eine Eingriffseinheit (20) aufweist, welche mit dem Fördermittel (16) in Mitnahmeeingriff steht oder bringbar ist, wobei die Eingriffseinheit (20) ein um eine Lagereinheit (22) umlaufendes Eingriffselement (24) aufweist, eine die Umlaufbewegung des Eingriffselements (24) beeinflussende Kupplungsanordnung (26) vorgesehen ist und wenigstens eine Profilschiene (12) einen Führungsabschnitt (36) aufweist, der mit der Lagereinheit (22) in Führungseingriff steht,
**dadurch gekennzeichnet, dass** die Eingriffseinheit ein am Fördergutträger federnd gelagertes Eingriffselement aufweist, dessen Mitnahmeeingriff mit dem Fördermittel aufgrund der federnden Lagerung aufhebbar ist.

2. Fördereinrichtung nach Anspruch 1,
**dadurch gekennzeichnet, dass** die Kupplungsanordnung eine Reibanordnung (26) umfasst.

3. Fördereinrichtung nach Anspruch 1,
**dadurch gekennzeichnet, dass** die Kupplungsanordnung eine verschleißfreie Kupplung umfasst, beispielsweise eine Magnetkupplung (162/164).

4. Fördereinrichtung nach einem der vorhergehenden Ansprüche,
**dadurch gekennzeichnet, dass** eine Stellanordnung (28) vorgesehen ist, mittels derer der Betrag der Beeinflussung der Umlaufbewegung des Eingriffselements (24) veränderbar ist.

5. Fördereinrichtung nach Anspruch 4,
**dadurch gekennzeichnet, dass** die Stellanordnung eine Federanordnung umfasst.

6. Fördereinrichtung nach Anspruch 4 oder 5,
**dadurch gekennzeichnet, dass** die Stellanordnung (28) in einer zur Umlaufebene des Eingriffselements (24) im Wesentlichen orthogonal verlaufenden Wirkrichtung auf die Kupplungsanordnung (26) einwirkt.

7. Fördereinrichtung nach einem der vorhergehenden Ansprüche,
**dadurch gekennzeichnet, dass** das Eingriffselement (24) ein Rad ist.

8. Fördereinrichtung nach einem der vorhergehenden Ansprüche,
**dadurch gekennzeichnet, dass** das Eingriffselement (24) und das Fördermittel (16) in formschlüssigem Mitnahmeeingriff stehen.

9. Fördereinrichtung nach einem der vorhergehenden Ansprüche,
**dadurch gekennzeichnet, dass** wenigstens eine Profilschiene (12) wenigstens eine Führungsausnehmung (38) zum Führen des Fördermittels (16) aufweist.

10. Fördereinrichtung nach einem der vorhergehenden Ansprüche,
**dadurch gekennzeichnet, dass** wenigstens eine Profilschiene (12) einen Gleitabschnitt (42; 42'; 42") aufweist, auf dem der wenigstens eine Fördergutträger (14) aufliegt.

11. Fördereinrichtung nach Anspruch 10,
**dadurch gekennzeichnet, dass** der Gleitabschnitt eine gesondert ausgebildete Gleitleiste (42) umfasst.

12. Fördereinrichtung nach Anspruch 10,
**dadurch gekennzeichnet, dass** der Gleitabschnitt ein an der Profilschiene (12) einstückig angeformter Gleitansatz (42') ist.

13. Fördereinrichtung nach einem der Ansprüche 1 bis 9,
**dadurch gekennzeichnet, dass** wenigstens eine Profilschiene (12) eine Führungsbahn (42") für wenigstens einen dem Fördergutträger (14) zugeordneten Linearschlitten (48) aufweist.

14. Fördereinrichtung nach einem der vorhergehenden Ansprüche,
**dadurch gekennzeichnet, dass** wenigstens eine Profilschiene (12) einen Rückführkanal (34) für das Fördermittel (16) aufweist.

15. Fördereinrichtung nach einem der vorhergehenden Ansprüche,
**dadurch gekennzeichnet, dass** wenigstens eine Profilschiene (12) mehrstückig ausgebildet ist mit wenigstens einem Tragprofil (30) und wenigstens einem Führungsprofil (32).

16. Fördereinrichtung nach Anspruch 15,
**dadurch gekennzeichnet, dass** das Tragprofil (30) als Leichtmetallprofil, vorzugsweise Aluminiumprofil, und das Führungsprofil (32) als Kunststoffprofil ausgebildet ist.

17. Fördereinrichtung nach Anspruch 15 oder 16,
**dadurch gekennzeichnet, dass** das Führungsprofil (32) auf das Tragprofil (30) aufrastbar ist.

18. Fördereinrichtung nach einem der vorhergehenden Ansprüche,
**dadurch gekennzeichnet, dass** das Eingriffselement (24) zumindest längs eines Teils der Förderstrecke neben dem Fördermittel (16) ferner mit einer zusätzlichen Eingriffsanordnung (50; 52) in Eingriff bringbar ist.

19. Fördereinrichtung nach Anspruch 18,
**dadurch gekennzeichnet, dass** die zusätzliche Eingriffsanordnung (50) feststehend ausgebildet ist.

20. Fördereinrichtung nach Anspruch 18,
**dadurch gekennzeichnet, dass** die zusätzliche Eingriffsanordnung (52) umlaufend ausgebildet ist.

21. Fördereinrichtung nach einem der vorhergehenden Ansprüche,
**dadurch gekennzeichnet, dass** jeder Fördergutträger (14) wenigstens zwei Eingriffselemente (20) aufweist

## Claims

1. Conveying device (10) for transport of transported goods, comprising at least one profile rail (12), at least one transported goods support (14), wherein said transported goods support is supported by and moveable along the profile rail (12), a drivable conveyor means (16) extending along at least one profile rail (12), wherein the at least one transported goods support (14) has at least one engagement unit (20), which is in locked-in engagement or can be brought into locked-in engagement with the conveyor means (16), wherein the engagement unit (20) has an engagement element (24) revolving about a bearing unit (22), a coupling assembly (26) that influences the revolving movement of the engagement element (24) is provided, and at least one profile rail (12) comprises a guide portion (36), which is in guided engagement with the bearing unit (22), **characterised in that** the engagement unit has an engagement element resiliently supported on a transported goods support, wherein a locked-in engagement of the engagement element with the conveyor means can be terminated on account of the resilient bearing.

2. Conveying device according to claim 1, **characterised in that** the coupling assembly includes a frictional assembly (26).

3. Conveying device according to claim 1, **characterised in that** the coupling assembly includes an abrasion-free coupling, for example, a magnetic coupling (162/164).

4. Conveying device according to any one of the preceding claims, **characterised in that** an adjustment assembly (28) is provided, wherein the amount of the effect on the revolving movement of the engagement element (24) is changeable by means of said adjustment assembly.

5. Conveying device according to claim 4, **characterised in that** the adjustment assembly includes a spring assembly.

6. Conveying device according to either claim 4 or claim 5, **characterised in that** the adjustment assembly (28) acts in an operating direction on the coupling assembly (26) that runs substantially orthogonally to the revolution plane of the engagement element (24).

7. Conveying device according to any one of the preceding claims, **characterised in that** the engagement element (24) is a wheel.

8. Conveying device according to any one of the preceding claims, **characterised in that** the engagement element (24) and the conveyor means (16) are in positive-fit, locked-in engagement.

9. Conveying device according to any one of the preceding claims, **characterised in that** at least one profile rail (12) has at least one guide recess (38) for guiding the conveyor means (16).

10. Conveying device according to any one of preceding claims, **characterised in that** at least one profile rail (12) has a sliding portion (42, 42', 42"), on which at least one transported goods support (14) lies.

11. Conveying device according to claim 10, **characterised in that** the sliding portion includes a separately formed sliding strip (42).

12. Conveying device according to claim 10, **characterised in that** the sliding portion is a sliding shoulder (42') formed integrally with the profile rail (12).

13. Conveying device according to any one of claims 1 to 9, **characterised in that** at least one profile rail (12) has a guideway (42") for at least one linear slide (48) associated with the transported goods support (14).

14. Conveying device according to any one of the preceding claims, **characterised in that** at least one profile rail (12) has a return channel (34) for the conveyor means (16).

15. Conveying device according to any one of the preceding claims, **characterised in that** at least one profile rail (12) is formed in multiple pieces with at least one support profile (30) and at least one guide profile (32).

16. Conveying device according to claim 15, **characterised in that** the support profile (30) is formed as a light-metal profile, preferably an aluminium profile, and the guide profile (32) is formed as a plastic profile.

17. Conveying device according to either claim 15 or claim 16, **characterised in that** the guide profile (32) can be locked onto the support profile (30).

18. Conveying device according to any one of the preceding claims, **characterised in that** the engagement element (24) can be brought into engagement with an auxiliary engagement assembly (50, 52) at least along a part of a conveying track near the conveyor means (16).

19. Conveying device according to claim 18, **characterised in that** the auxiliary engagement assembly (50) is formed to be stationary.

20. Conveying device according to claim 18, **characterised in that** the auxiliary engagement assembly (52) is formed to be revolving.

21. Conveying device according to any one of the preceding claims, **characterised in that** each transported goods support (14) has at least two engagement elements (20).

## Revendications

1. Dispositif de transport (10) pour le transport de produits, comportant :
- au moins un rail profilé (12),
- au moins un porte-produit (14) porté par ledit au moins un rail profilé (12) et mobile le long de celui-ci,
- un moyen de transport (16) pouvant être actionné et s'étendant le long dudit au moins un rail profilé (12),
l'au moins un porte-produit (14) comportant au moins une unité d'engrènement (20), qui est en prise ou peut être amenée en prise avec le moyen de transport (16), l'unité d'engrènement (20) comportant un élément d'engrènement (24) tournant autour d'une unité de support (22), un dispositif de couplage (26) influençant le mouvement de rotation de l'élément d'engrènement (24) étant prévu et au moins un rail profilé (12) comportant un tronçon de guidage (36) qui est en prise de guidage avec l'unité de support (22),
**caractérisé en ce que** l'unité d'engrènement comporte un élément d'engrènement, qui est monté sur ressort sur le porte-produit et dont la prise d'entraînement avec le moyen de transport peut être supprimée en raison du montage sur ressort.

2. Dispositif de transport selon la revendication 1, **caractérisé en ce que** le dispositif de couplage est formé par un dispositif à frottement (26).

3. Dispositif de transport selon la revendication 1, **caractérisé en ce que** le dispositif de couplage est formé par un élément de couplage non soumis à l'usure, tel qu'un élément de couplage magnétique (162/164)

4. Dispositif de transport selon l'une quelconque des revendications précédentes, **caractérisé en ce qu'**il est prévu un dispositif de réglage (28), qui permet de faire varier la valeur de l'influence sur le mouvement de rotation de l'élément d'engrènement (24).

5. Dispositif de transport selon la revendication 4, **caractérisé en ce que** le dispositif de réglage est un système à ressort.

6. Dispositif de transport selon la revendication 4 ou 5, **caractérisé en ce que** le dispositif de réglage (28) agit sur le dispositif de couplage (26) dans une direction sensiblement orthogonale au plan de rotation de l'élément d'engrènement (24).

7. Dispositif de transport selon l'une quelconque des revendications précédentes, **caractérisé en ce que** l'élément d'engrènement (24) est une roue.

8. Dispositif de transport selon l'une quelconque des revendications précédentes, **caractérisé en ce que** l'élément d'engrènement (24) et le moyen de transport (16) sont en prise d'entraînement l'un avec l'autre par complémentarité de forme.

9. Dispositif de transport selon l'une quelconque des revendications précédentes, **caractérisé en ce qu'**au moins un rail profilé (12) comporte au moins un évidement de guidage (38) pour le guidage du moyen de transport (16).

10. Dispositif de transport selon l'une quelconque des revendications précédentes, **caractérisé en ce qu'**au moins un rail profilé (12) comporte un tronçon de glissement (42 ; 42' ; 42"), sur lequel est en appui ledit au moins un porte-produit (14).

11. Dispositif de transport selon la revendication 10, **caractérisé en ce que** le tronçon de glissement est une barre de glissement (42) séparée.

12. Dispositif de transport selon la revendication 10, **caractérisé en ce que** le tronçon de glissement est une saillie de glissement (42') formée d'un seul tenant sur le rail profilé (12).

13. Dispositif de transport selon l'une quelconque des revendications 1 à 9, **caractérisé en ce qu'**au moins un rail profilé (12) comporte une voie de guidage (42") pour au moins un chariot linéaire (48) associé au porte-produit (14).

14. Dispositif de transport selon l'une quelconque des revendications précédentes, **caractérisé en ce qu'**au moins un rail profilé (12) comporte un canal de retour (34) pour le moyen de transport (16).

15. Dispositif de transport selon l'une quelconque des revendications précédentes, **caractérisé en ce qu'**au moins un rail profilé (12) est réalisé en plusieurs parties avec au moins un profilé de support (30) et au moins un profilé de guidage (32).

16. Dispositif de transport selon la revendication 15, **caractérisé en ce que** le profilé de support (30) est réalisé sous forme de profilé en métal léger, de préférence un profilé en aluminium, et le profilé de guidage (32) est réalisé sous forme de profilé en matière synthétique.

17. Dispositif de transport selon la revendication 15 ou 16, **caractérisé en ce que** le profilé de guidage (32) peut être enclenché sur le profilé de support (30).

18. Dispositif de transport selon l'une quelconque des revendications précédentes, **caractérisé en ce que** l'élément d'engrènement (24), au moins le long d'une partie du trajet de transport, peut être amené en prise non seulement avec le moyen de transport (16), mais aussi avec un dispositif d'engrènement (50 ; 52) supplémentaire.

19. Dispositif de transport selon la revendication 18, **caractérisé en ce que** le dispositif d'engrènement (50) supplémentaire est fixe.

20. Dispositif de transport selon la revendication 18, **caractérisé en ce que** le dispositif d'engrènement (52) supplémentaire est rotatif.

21. Dispositif de transport selon l'une quelconque des revendications précédentes, **caractérisé en ce que** chaque porte-produit (14) comporte au moins deux éléments d'engrènement (20).
